# EUROPEAN PATENT APPLICATION

(11) **EP 4 506 146 A1**
(43) Date of publication of application: **12.02.2025**
(21) Application number: 23190403.8
(22) Date of filing: 08.08.2023
(51) Int. Cl.: B29C 70/44, B29D 99/00, B29C 33/34, B29C 33/00, B29C 33/30, B29L 31/08

(54) **MOLD ASSEMBLIES AND METHODS IN WIND TURBINE BLADE MANUFACTURE**

(71) Applicant: LM Wind Power A/S, 6000 Kolding (DK)
(72) Inventor: BELOTE, Michael, Grand Forks, 58201 (US)
(74) Representative: Bardehle Pagenberg S.L.

(57) **Abstract**

The present disclosure relates to mold assemblies for manufacturing wind turbine blade shells. The mold assemblies comprise a mold frame and a mold arranged on top of the mold frame having a cavity. The mold cavity comprises a mold surface defining a surface of the wind turbine blade shell. The mold assembly further comprises one or more hollow chambers extending in a longitudinal direction of the mold assembly and comprising one or more inlet ducts configured to be connected to one or more vacuum channels. In addition, the mold assembly comprises one or more pumps connected to the one or more hollow chambers and configured to generate a negative pressure.

## Description

### FIELD

The present disclosure relates to wind turbine blades and methods for manufacturing wind turbine blades and sections of wind turbine blades. The present disclosure particularly relates to mold assemblies for use in manufacturing of wind turbine blades using a moving mold system and methods.

### BACKGROUND

Modern wind turbines are commonly used to supply electricity into the electrical grid. Wind turbines of this kind generally comprise a tower and a rotor arranged on the tower. The rotor, which typically comprises a hub and a plurality of blades, is set into rotation under the influence of the wind on the blades. This rotation generates a torque that is normally transmitted through a rotor shaft to a generator, either directly (in the case of "directly driven" or "gearless" wind turbines) or through the use of a gearbox. This way, the generator produces electricity which can be supplied to the electrical grid.

The wind turbine hub may be rotatably coupled to a front of the nacelle. The wind turbine hub may be connected to a rotor shaft, and the rotor shaft may then be rotatably mounted in the nacelle using one or more rotor shaft bearings arranged in a frame inside the nacelle. The nacelle is a housing arranged on top of a wind turbine tower that may contain and protect the gearbox (if present) and the generator (if not placed outside the nacelle) and, depending on the wind turbine, further components such as a power converter, and auxiliary systems.

It is known to manufacture wind turbine blades where each of the wind turbine blades are molded and assembled at the same workshop. The wind turbine blade may then be moved to another workshop, typically a finishing workshop, where the wind turbine blade is cut, trimmed, painted and the final fittings are mounted on the wind turbine blade.

The wind turbine blades are often made of fiber-reinforced polymer and are usually manufactured as shell parts in molds. The top side and the bottom side of the blade profile (typically the pressure side and suction side, respectively) are manufactured separately by arranging glass fiber mats in each of the two mold parts and injecting a liquid resin, which subsequently is cured. Afterwards, the two halves are glued together, often by means of internal flange parts. Glue is applied to the inner face of the lower blade half before the upper blade half is lowered thereon or *vice versa.* Additionally, one or two reinforcing profiles (beams) are often attached to the inside of the lower blade half prior to gluing to the upper blade half. A crane or hoisting assembly may be used to lift one of the mold parts about a hinge line for closure and opening of the molds.

The shell parts for the wind turbine blade are typically manufactured as fiber composite structures by means of VARTM (vacuum assisted resin transfer molding), where liquid polymer, also called resin, is supplied into a mold cavity, in which fiber reinforcement material (e.g. woven or unwoven fibers, fiber mats, rovings, or other) previously has been inserted, and where a vacuum is generated in the mold cavity.

Generally, the generation of vacuum in the mold cavity includes arranging vacuum channels throughout the mold cavity and connecting them to multiple vacuum vessels, which are cylindrical vessels with a volume of typically about 20 liters. The vacuum vessels are strategically distributed along the blade shell e.g. on a floor of the manufacturing plant by specialized technicians.

The vacuum vessels are connected at the same time to multiple vacuum pumps, which remove the air from the mold cavity by pulling it across the fibers, to the vacuum channels and into the vacuum vessels. The evacuation of air is a delicate process which takes no less than 30 minutes.

After vacuum has been generated in the mold cavity, resin is drawn in. The resin can be thermoset plastic or thermoplastics. A resilient vacuum bag may be placed on top of the fiber reinforcement material. So-called distribution layers or distribution tubes, also called inlet channels, may be used between the vacuum bag and the fiber reinforcement material in order to obtain as sound and efficient a distribution of polymer resin as possible. In most cases, the polymer applied is polyester or epoxy, and the fiber reinforcement is most often based on glass fibers and/or carbon fibers.

However, as the demand for wind turbines is rapidly increasing, it is found increasingly difficult to scale the conventional manufacturing method to accommodate the demand for several reasons: Firstly, the conventional manufacturing method requires that all the materials needed for manufacturing a wind turbine blade, e.g. resin and fiber reinforcement material, be transported to every workshop, which is logistically demanding. Secondly, every workshop has to be equipped with tools necessary for every single manufacturing step in the process, which results in a significant overhead. Additionally, the conventional manufacturing method requires a mold in every single workshop, which is expensive, since production and maintenance of molds are time consuming and thus expensive. Furthermore, the conventional manufacturing method occupies a lot of space, and since the workers at each workshop have to perform a variety of manufacturing steps, there is a risk that the quality of the manufactured wind turbine blades may suffer.

So far, wind turbine production still relies on the above mentioned manufacturing methods involving highly skilled human labor. EP2403708 proposes an alternative manufacturing method and an alternative manufacturing line involving "moving molds". In this prior art document, a manufacturing line is disclosed, wherein wind turbine blades are formed in a number of molds, each of the molds comprising at least a first mold part comprising a first mold cavity. The manufacturing line further comprises a number of separate workstations, where separate manufacturing steps are carried out. And the method comprises the following steps: a) arranging the fiber reinforcement material in a first mold cavity of a first mold part at a first work station, b) moving the first mold part with the fiber reinforcement materials by use of conveying means to a second work station having a different position than the first work station, and c) supplying a curable matrix material into the first mold cavity of the first mold part at the second work station. Hereby, a method is provided whereby wind turbine blades can be manufactured using fewer resources e.g. molds and tools, or alternatively improving the throughput as the method increases the number of manufactured wind turbine blades per time unit compared to conventionally project oriented manufacturing methods.

Since the mold sets are movable in relation to the workstations, the method furthermore provides that each workstation can be equipped with specialized and advanced equipment that is dedicated to the manufacturing step carried out at each workstation, as the method can reduce the required number of work stations. Additionally, each workstation can be manned with specialized workers that are skilled and trained in the manufacturing step carried out at that particular workstation. However, some of the workstations can also be automated, e.g. by using robots, such that fewer workers are needed. Automation is also expected to additionally improve the quality of the manufactured wind turbine blades.

The conveying means may comprise at least four wheels and/or rollers mounted on each of the number of molds, whereby the molds can easily be moved. The conveying means may also comprise rails or tracks on which the molds can be transported.

According to one example in the prior art, the method comprises the following step: d) moving the first mold part, while the matrix material is curing, by conveying means from the second workstation to a third workstation having a different position than the first and the second workstation. Hereby, the method reduces the manufacturing time, as the first mold is being moved from the second workstation to the third workstation while the matrix material that was infused in step b) is still curing.

The present disclosure provides examples of mold assemblies and methods that provide improvements over prior art wind turbine blade manufacturing.

### SUMMARY

In an aspect of the present disclosure, a mold assembly for manufacturing a wind turbine blade shell is provided. The mold assembly comprises a mold frame and a mold arranged on top of the mold frame and having a mold cavity. The mold cavity comprises a mold surface defining a surface of the wind turbine blade shell. The mold assembly further comprises one or more hollow chambers extending in a longitudinal direction of the mold and comprising one or more inlet ducts configured to be connected to one or more vacuum channels in the mold cavity, and one or more pumps connected to the one or more hollow chambers and configured to generate a negative pressure.

According to this aspect, a negative pressure may be produced in the hollow chambers in any location of the mold assembly e.g. anywhere in a production line. The mold assembly does not need to be at a specific location such that negative pressure in the mold cavity may be produced. Vacuum in the mold assembly may be produced while the mold assembly is moving from one workstation to another workstation, thereby substantially reducing manufacturing time of a wind turbine blade shell.

In a further aspect of the disclosure, a production line for manufacturing a wind turbine blade is provided. The production line comprises a first workstation, a second workstation and one or more mold assemblies according to any example of the aforementioned aspect. The one or more mold assemblies are configured to be moved from the first workstation to the second workstation.

As used throughout the present disclosure, a "production line", or "manufacturing line" may be regarded as a group of workstations which are generally arranged in the same geographical location i.e. at a manufacturing site such as a factory. The production line may in particular include an assembly of two half shells and the end product of the production line may be a finished blade, or almost finished blade (which only requires minor finishing operations).

As used throughout the present disclosure, a workstation may be regarded as a part of a production line, in which individual operations are carried out on a wind turbine blade or precursor of a blade, particularly a half shell of a blade. Some of the operations may be carried out by machines or "robots", although other operations may be carried out manually in some examples. A workstation may generally be regarded as an area of a factory floor, which is dedicated to a plurality of operations. A workstation may also be regarded as a "cell" of a production line.

After a blade (shell) has undergone the operations assigned to a specific workstation, the mold with shell may be discharged from the workstation, e.g. the mold may be conveyed to the next workstation. Each of the workstations may include one or more production tools.

In yet a further aspect of the present disclosure, a method for manufacturing a wind turbine blade shell in a mold is provided. The method comprises the step of forming a negative pressure in a mold assembly while the mold assembly is being conveyed from a first workstation to a second workstation.

### BRIEF DESCRIPTION OF THE DRAWINGS

Figure 1 illustrates a perspective view of an example of a wind turbine;
Figure 2A illustrates a perspective view of an example of a wind turbine blade;
Figure 2B schematically illustrates an internal structure of a wind turbine blade;
Figure 2C is a schematic diagram illustrating a mold system for molding a blade shell of a wind turbine blade;
Figure 3 schematically illustrates a cross-section of an example of a mold assembly;
Figure 4 schematically illustrates an example of a production line for manufacturing a wind turbine blade;
Figure 5 schematically illustrates another example of a production line for manufacturing a wind turbine blade; and
Figure 6 shows a flowchart of a method for manufacturing a wind turbine blade shell.

### DETAILED DESCRIPTION OF EXAMPLES

Reference now will be made in detail to embodiments of the present disclosure, one or more examples of which are illustrated in the drawings. Each example is provided by way of explanation only, not as a limitation. In fact, it will be apparent to those skilled in the art that various modifications and variations can be made in the present disclosure. For instance, features illustrated or described as part of one embodiment can be used with another embodiment to yield a still further embodiment. Thus, it is intended that the present disclosure covers such modifications and variations as come within the scope of the appended claims and their equivalents.

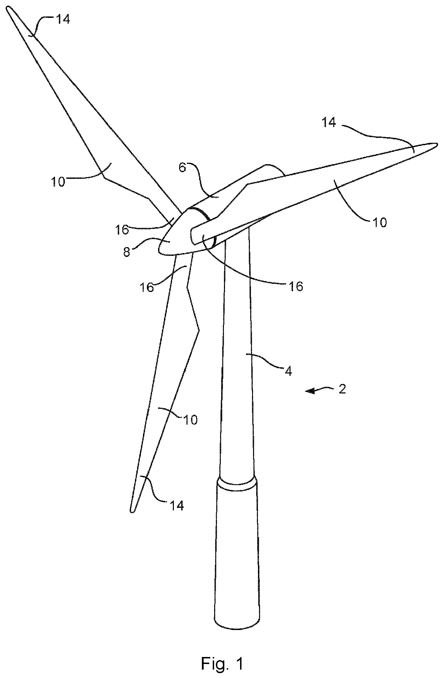

Fig. 1 illustrates a conventional modern upwind wind turbine 2 according to the so-called "Danish concept" with a tower 4, a nacelle 6 and a rotor with a substantially horizontal rotor shaft. The rotor includes a hub 8 and three blades 10 extending radially from the hub 8, each having a blade root 16 nearest the hub and a blade tip 14 furthest from the hub 8.

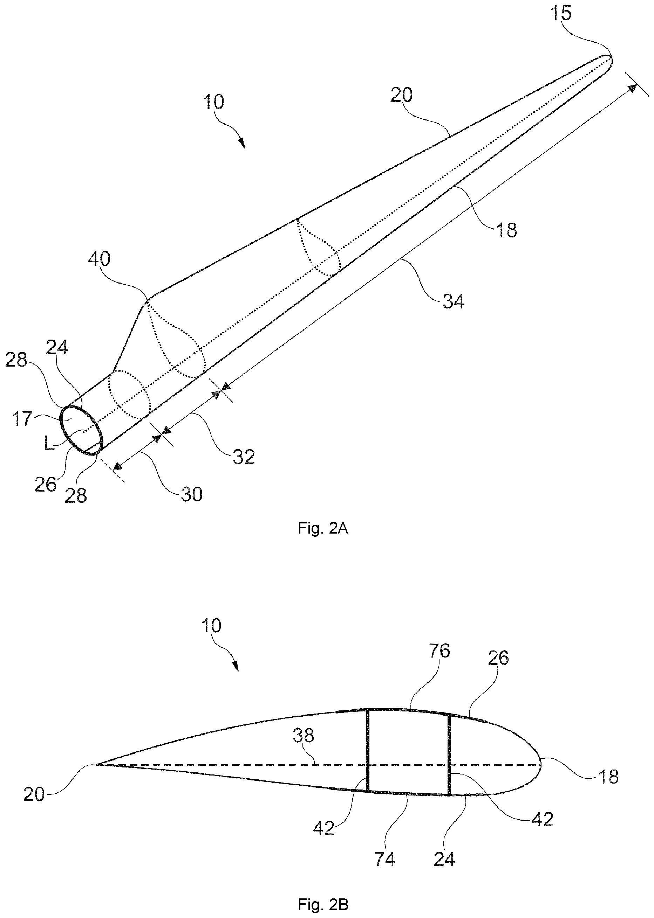

Fig. 2A shows a schematic view of an example of a wind turbine blade 10. The wind turbine blade 10 has the shape of a conventional wind turbine blade with a root end 17 and a tip end 15 and comprises a root region 30 closest to the hub, a profiled or an airfoil region 34 furthest away from the hub and a transition region 32 between the root region 30 and the airfoil region 34. The blade 10 comprises a leading edge 18 facing the direction of rotation of the blade 10, when the blade is mounted on the hub, and a trailing edge 20 facing the opposite direction of the leading edge 18.

The airfoil region 34 (also called the profiled region) has an ideal or almost ideal blade shape with respect to generating lift, whereas the root region 30 due to structural considerations has a substantially circular or elliptical cross-section, which for instance makes it easier and safer to mount the blade 10 to the hub. The diameter (or the chord) of the root region 30 may be constant along the entire root area 30. The transition region 32 has a transitional profile gradually changing from the circular or elliptical shape of the root region 30 to the airfoil profile of the airfoil region 34. The chord length of the transition region 32 typically increases with increasing distance r from the hub. The airfoil region 34 has an airfoil profile with a chord extending between the leading edge 18 and the trailing edge 20 of the blade 10. The width of the chord decreases with increasing distance r from the hub.

A shoulder 40 of the blade 10 is defined as the position, where the blade 10 has its largest chord length. The shoulder 40 is typically provided at the boundary between the transition region 32 and the airfoil region 34.

It should be noted that the chords of different sections of the blade normally do not lie in a common plane, since the blade may be twisted and/or curved (i.e. pre-bent), thus providing the chord plane with a correspondingly twisted and/or curved course, this being most often the case in order to compensate for the local velocity of the blade being dependent on the radius from the hub.

The wind turbine blade 10 comprises a blade shell comprising two blade shell parts or half shells, a first blade shell part 24 and a second blade shell part 26, typically made of fiber-reinforced polymer. The wind turbine blade 10 may comprise additional shell parts, such as a third shell part and/or a fourth shell part. The first blade shell part 24 is typically a pressure side or upwind blade shell part. The second blade shell part 26 is typically a suction side or downwind blade shell part. The first blade shell part 24 and the second blade shell part 26 are fastened together with adhesive, such as glue, along bond lines or glue joints 28 extending along the trailing edge 20 and the leading edge 18 of the blade 10. Typically, the root ends of the blade shell parts 24, 26 has a semi-circular or semi-oval outer cross-sectional shape.

Fig. 2B is a schematic diagram illustrating a cross sectional view of an example of a wind turbine blade 10, e.g. a cross-sectional view of the airfoil region of the wind turbine blade 10. The wind turbine blade 10 comprises a leading edge 18, a trailing edge 20, a pressure side 24, a suction side 26 a first spar cap 74, and a second spar cap 76. The wind turbine blade 10 comprises a chord line 38 between the leading edge 18 and the trailing edge 20. The wind turbine blade 10 comprises shear webs 42, such as a leading edge shear web and a trailing edge shear web. The shear webs 42 could alternatively be a spar box with spar sides, such as a trailing edge spar side and a leading edge spar side. The spar caps 74, 76 may comprise carbon fibers while the rest of the shell parts 24, 26 may comprise glass fibers.

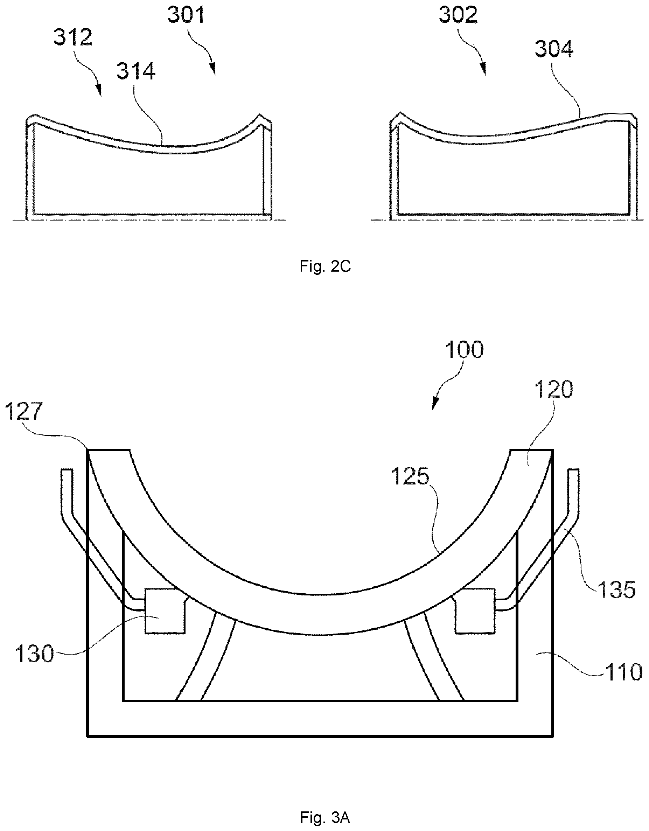

Fig. 2C is a schematic diagram illustrating an example of a mold system for molding a blade shell of a wind turbine blade. The mold system 301 comprises a first mold 302 and a second mold 312. The first mold 302 is configured for manufacturing a first blade shell part of a wind turbine blade, such as an upwind shell part of the wind turbine blade (forming the pressure side). The second mold 312 is configured for manufacturing a second blade shell part of the wind turbine blade, such as a downwind shell part of the wind turbine blade (forming the suction side). Surfaces 304 and 314 are mold surfaces for depositing fibers.

Figure 3A schematically illustrates a cross-section view of a mold assembly 100 for manufacturing a wind turbine blade according to an example of the present disclosure. The mold assembly 100 comprises a mold frame 110 and a mold 120 arranged on top of the mold frame, and having a mold cavity 125, wherein the mold cavity 125 comprises a mold surface defining a surface of the wind turbine blade shell. The mold assembly 100 further comprises one or more hollow chambers 130 extending in a longitudinal direction of the mold assembly 100 and comprising one or more inlet ducts 135 configured to be connected to one or more vacuum channels. The mold assembly 100 also comprises one or more pumps connected to the one or more hollow chambers 130 and configured to generate a negative pressure.

Since no additional or external elements are needed in order to produce a negative pressure, the mold assembly enables the creation of a pressure free area in the hollow chambers anywhere in a production line. The vacuum process is not restricted to be carried out at any specific location e.g. at a certain workstation, and a controlled vacuum process in the mold cavity may be possible while the mold is being conveyed from a first workstation to a second workstation. The production yield of the wind turbine blade shells may therefore be improved.

A hollow chamber 130 may be understood as an enclosure having an empty space. In some examples, the hollow chambers 130 may be made of a rigid and light material e.g. aluminum, such that additional unnecessary weight may not be added to the mold assembly. In some examples, the hollow chambers 130 may be vacuum vessels.

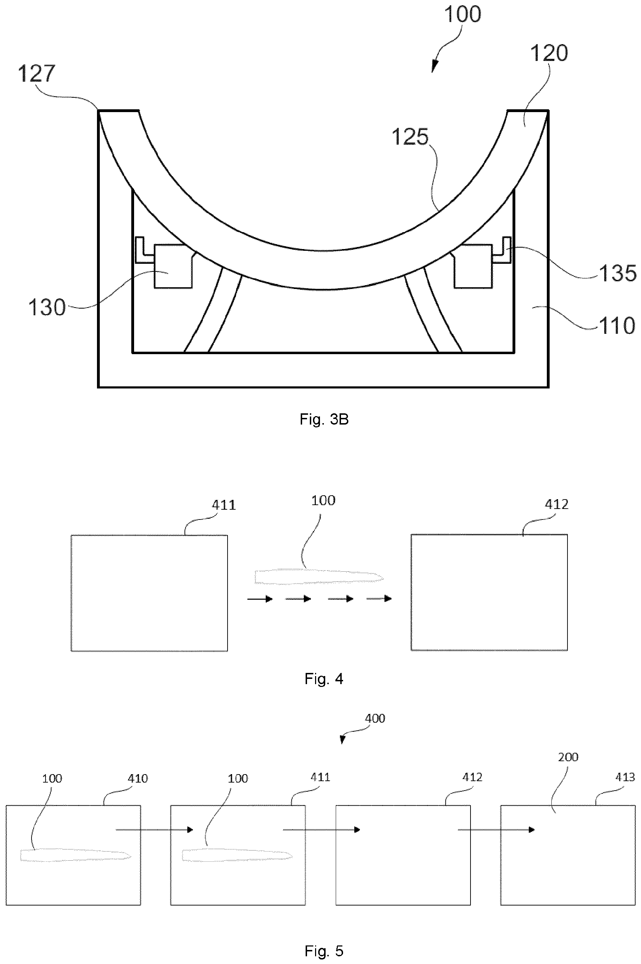

In the examples shown in figures 3A and 3B, the mold assembly 100 comprises two hollow chambers 130. The hollow chambers comprise a squared cross-section, although different shapes of cross-sections may also be possible. In other examples, the mold assembly may comprise one single hollow chamber or more than two hollow chambers.

The volume of the hollow chambers 130 may be enough to generate the negative pressure needed in the mold cavity 125 during the resin infusion process. Depending on the size of the hollow chambers 130, the generation of under pressure in the mold cavity 125 may take more or less time. In some examples, the length of the mold 120 may be around 125 meters and the volume of the hollow chambers 130 may be 3.5 - 4 m³. In some examples, the mold assembly 100 may comprise two hollow chambers 130, each of the hollow chambers having a volume of 1.7 - 2 m³.

In some examples, the hollow chambers 130 may comprise elongated hollow chambers which extend along at least 50% of a length of the mold, specifically at least 70% of a length of the mold, more specifically at least 90% of a length of the mold.

The hollow chambers 130 may be permanently fixed to the mold assembly 100. In some examples, the hollow chambers 130 may be mechanically joined to the mold 125. Further, the mold 120 and/or the mold frame 110 may comprise one or more pumps connected to the one or more hollow chambers 130 joined to the mold. The pumps may be permanently attached to the mold assembly.

In other examples, the hollow chambers 130 may be mechanically joined to the mold frame 110 of the mold assembly. By attaching the hollow chambers to the mold frame 110 rather than to the mold 125, the weight of the mold is not increased, and an exchange of a mold on top of a mold frame may be facilitated.

In some examples, the mold frame 110 may have conveying means for moving the mold assembly from a first location to a second location, e.g. from a first workstation to a second workstation. In some examples, the mold frame 110 may comprise at least one of rollers, skates and/or wheels. In other examples, the mold frame 110 may be configured to be conveyed along one or more guides. In some examples, the guides may be rails defining a conveying path through a workstation or a production line. The mold frame 110 may comprise a drive or other propulsion mechanism.

As schematically illustrated in figures 3A and 3B, the mold frame 110 may be a single unified structure. In other examples, the mold frame 110 may comprise an upper part configured to contact the mold and a lower part comprising the conveying means. The upper part and the lower part of the mold frame 110 may be separated/disassembled from one another.

In some examples, the lower part of the mold frame 110 may be a bed frame configured to be arranged underneath the upper part of the mold frame 110. The bedframe may comprise rollers and/or wheels. The bedframe may also be configured to be conveyed along one or more guides.

In some examples, the one or more hollow chambers 130 may be located in the bed frame of the mold assembly 100. In other examples, the one or more hollow chambers 130 may be fixed to the upper part of the mold frame. The one or more pumps may be located either in the upper part of the mold frame or in the bed frame of the mold assembly.

Throughout the present disclosure, vacuum channels may be understood as ducts which may be arranged in the mold cavity and through which air within the mold cavity may be evacuated so as to form an under pressure. The vacuum channels may be open towards the mold cavity, which may be defined by a vacuum bag. In some examples, the vacuum channels may be a perforated tube or a spiral tube having a spiral-shaped outer wall.

In some examples, the vacuum channels may be arranged within the mold cavity 125 and may comprise an end extending 200 - 500 mm from the mold flange 127. The vacuum channels may be joined to the hollow chambers 130 directly i.e. the end of the vacuum channels may be directly connected to the inlet ducts of the hollow channels, or via one or more intermediate channels or hoses i.e. the end of the vacuum channels may be joined to an additional intermediate hose which may be configured to join the inlet ducts of the hollow chambers located within the mold frame. These intermediate channels may be flexible and may be able to adapt their position such that a connection between the vacuum channels in the mold flange and the inlet ducts 135 located within the mold frame may be possible.

The inlet ducts 135 of the hollow chambers may be tubes configured to connect the hollow chambers 130 with one or more channels. The channels may be external channels which are not part of the mold assembly 100. The external channels may comprise vacuum channels and/or intermediate hoses. In some examples, the one or more inlet ducts 135 may comprise one or more valves which may be configured to control the passage of air through the ducts.

In some examples, the one or more inlet ducts 135 of the hollow chambers 130 may be rigid. Rigid inlet ducts may allow better sealing between the inlet ducts and the channels, and an increased quality of the vacuum and therefore of the resin infusion process may be provided. In examples of the present disclosure, such rigid inlet ducts can be used particularly because the hollow chambers are permanently arranged with the mold.

Further, as schematically shown in figure 3A, the one or more inlet ducts 135 may extend outside of the mold frame 110 towards a mold flange 127. In these examples, the rigid inlet ducts may comprise two valves, which may be configured to seal a connection with the vacuum channels. Accordingly, the vacuum channels may be directly connected to the inlet ducts 135 i.e. without the need for an intermediate flexible channel acting as a connection between them. In particular, the inlet ducts 135 may be configured such that the vacuum channels may be inserted between the two valves in the vicinity of the mold flange e.g. 200 - 500 mm from the mold flange 127.

Figure 3B schematically illustrates another example of a mold assembly 100 according to the present disclosure. In the example shown in figure 3B, the one or more inlet ducts 135 are arranged within the mold frame 110. The inlet ducts 135 may have a valve and may be configured to connect to one or more intermediate channels. The intermediate channels may be configured to connect to the vacuum channels located near the mold flange 127 to the inlet ducts 135 located within the mold frame 110.

In some examples, the one or more pumps configured to generate a negative pressure may be permanently fixed to the mold assembly 110. The pumps may be connected to electrical means e.g. portable batteries such that the pump may be activated in any location of the mold assembly.

In some examples, the one or more mold assemblies 100 for manufacturing a wind turbine blade shell may be part of a production line 400 for manufacturing a wind turbine blade.

Figure 4 shows a production line 400 according to an example of the present disclosure.

The production line 400 for manufacturing a wind turbine blade comprises a first workstation 411, a second workstation 412 and one or more mold assemblies 100 according to any one of the examples which have been discussed throughout the present disclosure. The one or more mold assemblies 100 are configured to be moved from the first workstation 411 to the second workstation 412.

In the first and second workstation 411, 412 of the production line 400, one or more steps for manufacturing a wind turbine blade half shell may be carried out. In some examples, the manufacturing steps may comprise the supply of materials into one or more mold cavities. The manufacturing steps may comprise applying gelcoat to an inside of the mold cavities, laying fiber reinforcement material in the mold cavities, infusing fibers laid in the mold cavities with a resin and/or assembling two blade half shells.

The one or more mold assemblies 100 of the production line 400 may be configured to generate a negative pressure in the hollow chambers while the mold assembly is moving from the first workstation 411 to the second workstation 412.

In some examples, the first workstation 411 may be a fiber lay-up station and the second station 412 may be a resin infusion station. The time invested in moving the mold assembly from workstation to workstation may be used to generate a vacuum in the mold cavity i.e. while the mold assembly is moving from the fiber lay-up station to the resin infusion station. The production process may be more efficient since less time may be spent in the workstations e.g. negative pressure does not need to be generated in the fiber lay-up station so less time may be spent at that workstation. In addition, negative pressure does not need to be generated in the infusion workstation either. Resin may be infused into the mold cavity just as the mold reaches the resin infusion station.

As shown in figure 5, the production line may comprise additional workstations. In the example shown in figure 5, the production line 400 for manufacturing a wind turbine blade comprises four workstations from empty molds to closing of the mold (and gluing of the blade halves).

The workstations may be a gelcoat station 410, where gelcoat may be applied to an inside of the mold cavity, a fiber lay-up station 411, where fiber reinforcement material, fibers, may be laid in the mold cavity, a resin infusion station 412, where fibers previously laid on the mold cavity may be infused with a resin, and a closing workstation 413, where two blade shells may be joined obtaining an assembled wind turbine blade. The one or more mold assemblies may be configured to be moved firstly to the gelcoat station 410, secondly to the fiber lay-up station 411, then to the resin infusion station 412 and finally to the closing workstation 413. In some examples, further workstations (e.g. for inspection, for finishing, painting etc.) may be included in the same production line.

In yet a further aspect of the present disclosure, a method 500 for manufacturing a wind turbine blade shell in a mold may be provided. Figure 5 shows a flow chart of the method.

As shown in figure 5, the method comprises, at block 604, the step of forming a negative pressure in a mold assembly while the mold assembly is being conveyed from a first workstation to a second workstation. The negative pressure may be formed at least in the hollow chambers of the mold assembly.

In some examples, forming a negative pressure in the mold assembly may comprise forming a negative pressure in the mold cavity while the mold is being conveyed from a first workstation to a second workstation. The first workstation and the second workstation may form part of a moving mold production line 400.

In some examples, the method 600 may include providing any example of a mold assembly 100 previously disclosed comprising a mold cavity 125 and a mold frame 110 and arranging one or more vacuum channels in the mold cavity 125. In particular, the method 600 may comprise, at block 602, laying-up fibers in the mold cavity 125 when the mold assembly 100 is in a first workstation 411 e.g. in a fiber lay-up station, arranging one or more vacuum channels in the mold cavity 125 and placing a resilient vacuum bag on top of the fiber material and the vacuum channels.

Further, the one or more vacuum channels may be connected to the inlet ducts of the hollow chambers 130 in the first workstation 411. The mold assembly may be moved to the second workstation 412, the pumps of the mold assembly may be activated and a negative pressure in the hollow chambers 130 and in the mold cavity may be initiated.

In some examples, connecting the one or more vacuum channels to one or more inlet ducts may comprise directly connecting the one or more vacuum channels to the one or more inlet ducts. The inlet ducts may comprise two valves e.g. located in an airlock style and the vacuum channels may be inserted between the two valves of the inlet ducts. In some examples, the valves may comprise an airlock valve. In particular, a first valve may be open and the vacuum channels may be inserted between the two valves. The first valve may then be closed. A negative pressure in the mold cavity may be achieved by opening the first and second valves when the vacuum channels are connected to the inlet ducts. Accordingly, vacuum may not be pulled prematurely.

In further examples, connecting the one or more vacuum channels to one or more inlet ducts may comprise connecting the one or more vacuum channels to one or more intermediate flexible channels or hoses connected to the one or more inlet ducts. The one or more intermediate flexible channels may act as an extension of the vacuum channels. The inlet ducts may comprise a valve which may be open to generate an under pressure in the one or more flexible channels, and consequently in the one or more vacuum channels and the mold cavity 125.

The method may further comprise conveying the mold assembly 100 from the first workstation 411 to the second workstation 412. The time used for conveying the mold assembly 100 from the first workstation 411 to the second workstation 412 may be used to generate a negative pressure in the mold cavity 100.

In further examples, a negative pressure may be started to be formed within the hollow chambers 130 before the connection of the vacuum channels to the inlet ducts e.g. while the fibers or the vacuum channels are being arranged in the mold cavity. An under pressure may be produced faster in the mold cavity when the vacuum channels are finally connected to the hollow chambers 130. In some examples, a negative pressure may be created or initiated within the hollow chambers 130 before the mold is in the infusion station. The method gives flexibility in the generation of vacuum, broadening the possibilities of the vacuum process and therefore allowing a reduction of an overall production time.

In some examples, the vacuum channels may be connected to the inlet ducts of the hollow chambers when the mold assembly 100 reaches the second workstation 412, and a negative pressure may be formed in the mold cavity 125. A flexible production line may be provided. The process may be adapted to specific requirements of the production line and the process of vacuum generation may not be designed to be carried out in a single specific location. The difference in pressure between the hollow chambers and the mold cavity may lead to a generation of under pressure in the mold cavity in an efficient and fast manner.

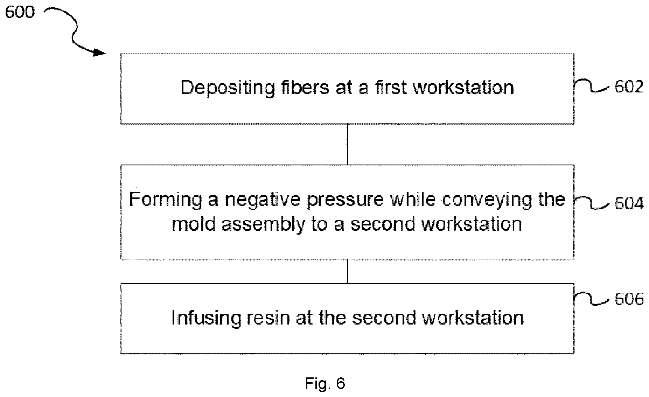

The method may further comprise, as shown at block 606 of figure 6, infusing resin into the mold cavity 125 when the mold 100 is in the second workstation 412. The vacuum generated in the mold cavity 125 facilitates resin flow into the fiber lay-up contained within the mold 120. The resin may be injected into the mold cavity 125 as soon as the mold reaches the second workstation 412. Production flow may be increased since vacuum may be generated while the mold assembly is being conveyed.

This written description uses examples to disclose a teaching, including the preferred embodiments, and also to enable any person skilled in the art to put the teaching into practice, including making and using any devices or systems and performing any incorporated methods. The patentable scope is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims. Aspects from the various embodiments described, as well as other known equivalents for each such aspects, can be mixed and matched by one of ordinary skill in the art to construct additional embodiments and techniques in accordance with principles of this application. If reference signs related to drawings are placed in parentheses in a claim, they are solely for attempting to increase the intelligibility of the claim, and shall not be construed as limiting the scope of the claim.

## Claims

1. A mold assembly (100) for manufacturing a wind turbine blade shell, comprising
a mold frame (110);
a mold (120) arranged on top of the mold frame (110), and having a cavity (125), wherein the mold cavity (125) comprises a mold surface defining a surface of the wind turbine blade shell; and
wherein the mold assembly (100) further comprises:
one or more hollow chambers (130) extending in a longitudinal direction of the mold assembly (100) and comprising one or more inlet ducts configured to be connected to one or more vacuum channels in the mold cavity; and
one or more pumps connected to the one or more hollow chambers (130) and configured to generate a negative pressure.

2. The mold assembly (100) of claim 1, wherein the hollow chambers (130) are permanently fixed to the mold assembly (100).

3. The mold assembly (100) of claim 1 or 2, wherein the hollow chambers (130) are mechanically joined to the mold (120).

4. The mold assembly (100) of claim 1 or 2, wherein the hollow chambers (130) are mechanically joined to the mold frame (110).

5. The mold assembly (100) of any of claims 1 - 4, wherein the hollow chambers (130) comprise elongated hollow chambers (130) which extend along at least 50% of a length of the mold, specifically at least 70% of a length of the mold, more specifically at least 90% of a length of the mold (120).

6. The mold assembly (100) of any of claims 1 - 5, wherein the inlet ducts are rigid.

7. The mold assembly (100) of any of claims 1 - 6, wherein the inlet ducts are arranged within the mold frame (110).

8. The mold assembly (100) of any of claims 1 - 7, wherein the inlet ducts extend outside of the mold frame (110) towards a mold flange (127).

9. A production line (400) for manufacturing a wind turbine blade, the production line (400) comprising:
a first workstation (411);
a second workstation (412);
one or more mold assemblies (100) according to any of claims 1 - 8, wherein the one or more mold assemblies (100) are configured to be moved from the first workstation (411) to the second workstation (412).

10. A method (600) for manufacturing a wind turbine blade shell in a mold (120) comprising the step of forming a negative pressure in a mold assembly (100), optionally a mold assembly according to any of claims 1 - 8, while the mold assembly (100) is being conveyed from a first workstation (411) to a second workstation (412).

11. The method of claim 10, wherein fibers are deposited while the mold is in the first workstation.

12. The method (600) of claim 10 or 11, wherein the first workstation (411) and the second workstation (412) form part of a moving mold production line (400).

13. The method (600) of any of claims 10 - 12, wherein the method includes:
providing a mold assembly (100) comprising a mold cavity (125) and a mold frame (110);
forming a negative pressure in one or more hollow chambers (130) of the mold assembly (100);
arranging one or more vacuum channels in the mold cavity (125);
connecting the one or more vacuum channels to one or more inlet ducts of one or more hollow chambers (130) of the mold assembly;
forming a negative pressure in the mold cavity (125) while the mold (120) is being conveyed from the first workstation (411) to the second workstation (412), and optionally wherein the one or more vacuum channels are arranged in the mold cavity when the mold is in the first workstation (411).

14. The method (600) of claim 13, wherein connecting the one or more vacuum channels to the one or more inlet ducts comprises directly connecting the one or more vacuum channels to the one or more inlet ducts, wherein the inlet ducts comprise two valves, or wherein connecting the one or more vacuum channels to the one or more inlet ducts comprises connecting the one or more vacuum channels to one or more flexible hoses configured to be connected to the inlet ducts.

15. The method of any of claims 10 - 14, further comprising infusing resin into the mold cavity when the mold is in the second workstation (412).
